(19) **Europäisches Patentamt**

**European Patent Office**

**Office européen des brevets**

(11) **EP 1 284 054 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
**H04B 7/06** (2006.01)

(21) Anmeldenummer: **01947169.7**

(22) Anmeldetag: **22.05.2001**

(86) Internationale Anmeldenummer:
**PCT/DE2001/001969**

(87) Internationale Veröffentlichungsnummer:
**WO 2001/091324 (29.11.2001 Gazette 2001/48)**

(54) **VERFAHREN UND KOMMUNIKATIONSSYSTEM ZUR SCHÄTZUNG EINER STÖRUNGS-KOVARIANZMATRIX FÜR DIE ABWÄRTSVERBINDUNG IN ZELLULAREN MOBILFUNKNETZEN MIT ADAPTIVEN ANTENNEN**

METHOD AND COMMUNICATIONS SYSTEM FOR ESTIMATING AN ERROR COVARIANCE MATRIX FOR THE DOWNLINK IN CELLULAR MOBILE RADIO TELEPHONE NETWORKS WITH ADAPTIVE ANTENNAE

PROCEDE ET SYSTEME DE COMMUNICATION POUR ESTIMER UNE MATRICE DE COVARIANCES DE PERTURBATION POUR LA LIAISON DESCENDANTE DANS DES RESEAUX RADIOTELEPHONIQUES CELLULAIRES MOBILES A ANTENNES ADAPTATIVES

(84) Benannte Vertragsstaaten:
**DE ES FR GB IT TR**

(30) Priorität: **22.05.2000 DE 10025287**

(43) Veröffentlichungstag der Anmeldung:
**19.02.2003 Patentblatt 2003/08**

(73) Patentinhaber: **SIEMENS AKTIENGESELLSCHAFT**
**80333 München (DE)**

(72) Erfinder:
• **HAARDT, Martin**
**98716 Geraberg (DE)**
• **MECKLENBRÄUKER, Christoph**
**A-1220 Wien (AT)**

(56) Entgegenhaltungen:
EP-A- 0 866 568    EP-A- 0 899 896
WO-A-01/31812    WO-A-97/44919
DE-A- 19 803 188

• WECKERLE M ET AL: "Estimation and utilization of spatial intercell interference covariance matrices in multi-antenna TD-CDMA-systems" 10TH INTERNATIONAL SYMPOSIUM ON PERSONAL, INDOOR AND MOBILE RADIO COMMUNICATIONS (PIMRC'99). PROCEEDINGS, PROCEEDINGS OF PIMRC'99: INTERNATIONAL SYMPOSIUM ON PERSONAL AND INDOOR MOBILE RADIO COMMUNICATIONS, OSAKA, JAPAN, 12-15 SEPT. 1999, Seiten 1198-1202 vol.3, XP001033461 1999, Odsaka, Japan, Osaka Univ, Japan

EP 1 284 054 B1

**Beschreibung**

Die Erfindung bezieht sich auf ein Verfahren zur richtungsabhängigen Steuerung der Leistung für die Abwärtsverbindung in einem zellularen Funk-Kommunikationsnetz mit adaptiven Antennen mit den oberbegrifflichen Merkmalen des Patentanspruchs 1 bzw. ein Kommunikationssystem mit den oberbegrifflichen Merkmalen des Patentanspruchs 11, das ein solches Verfahren ermöglicht.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen bei 900, 1800 bzw. 1900 MHz. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Bei diesen Funk-Kommunikationssystemen findet die Datenübertragung über Rahmen statt. Gemäß einer TDMA-Komponente (TDMA: Time Division Multiple Access) ist eine Aufteilung eines breitbandigen Frequenzbereichs in mehrere Zeitschlitze gleicher Zeitdauer vorgesehen. Die Zeitschlitze werden teilweise in Abwärtsrichtung DL (Downlink von Basisstation zu Teilnehmerstation) und teilweise in Aufwärtsrichtung UL (Uplink von Teilnehmerstation zu Basisstation) benutzt. Dazwischen liegen einer oder mehrere Umschaltpunkte. Gleiches wiederholt sich für weitere Trägerfrequenzen. Innerhalb der Zeitschlitze werden Informationen mehrerer Verbindungen in Funkblöcken übertragen. Funkblöcke zur Nutzdatenübertragung bestehen derzeit aus Abschnitten mit Daten, in denen empfangsseitig bekannte Trainingssequenzen bzw. Mittambeln eingebettet sind.

Die Umschaltpunkte können synchron in allen Zellen des Funk-kommunikationssystems definiert sein. In diesem Fall wird ein Zeitschlitz im ganzen Funk-Kommunikationssystem ausschließlich in Aufwärtsrichtung UL oder ausschliesslich in Abwärtsrichtung DL verwendet. Zusätzliche Flexibilität wird erreicht, wenn die Umschaltpunkte asynchron definiert sind. In diesem Fall verwenden einige Zellen des Funk-Kommunikationssystems einen Zeitschlitz für UL und andere für DL.

Wegen des während des Betriebs oftmals stark schwankenden Abstands zwischen Sender und Empfänger wird eine Anpassung der Sendeleistung über bis zu mehrere Größenordnungen gewünscht, um das Verhältnis Energie pro Bit/Rauschleistungsdichte oder das Verhältnis Signal/Störer bzw. Trägerleistung/Interferenzleistung im Grenz- bzw. Zielbereich zu halten. Einerseits muß die Empfangsleistung eine Mindeststärke aufweisen, die für die gewünschte Dienstequalität erforderlich ist, andererseits soll aber so wenig Interferenz wie möglich erzeugt werden.

Aus der DE 198 03 188 sind ein Verfahren und eine Basisstation für insbesondere TDMA/CDMA-Übertragungsverfahren (CDMA: Code Division Multiple Access) bekannt, bei denen die von der Basisstation in der Abwärtsverbindung gesendeten Signale gezielt in Richtung der zugeordneten Teilnehmerstation verstärkt und in den anderen Richtungen abgeschwächt werden. Dazu werden bei der Basisstation für jede Teilnehmerstation räumliche Kovarianzmatrizen zum Bestimmen verstärkender Interferenzen aus dem in Aufwärtsrichtung empfangenen Signal geschätzt und danach ein Strahlformungsvektor berechnet, der das Signal/Stör-Verhältnis beim Empfänger maximiert. Dabei wird ein allgemeines Eigenwertproblem ohne Iteration gelöst. Daraufhin werden für die entsprechende Funkverbindung Sendesignale mit dem Strahlformungsvektor gewichtet und den Antennenelementen der Antennenanordnung zum Abstrahlen zugeführt. Die Kovarianzmatrix wird aus a-priori-Annahmen mit Hilfe eines mathematischen Modells bestimmt. Da die Basisstation während des Sendens zu ihrer Teilnehmerstation im entsprechenden Abwärtsverbindungs-Zeitschlitz nichts messen. Daher müssen zur Abschätzung Aufwärtsverbindungs-Messungen der Trainingssequenzen herangezogen werden, um die Abwärtsverbindungs-Kovarianzmatrix abzuschätzen.

Mit anderen Worten, bei diesem Verfahren wird der Antennengewinn der Antennenanordnung der Basisstation in bestimmten Richtungen, die den eigenen Teilnehmerstationen zugeordnet werden, durch eine entsprechende Ansteuerung der einzelnen Antennenelemente der Antennenanordnung maximiert. Dass heißt, die Leistung, die von einer Antennengruppe zu einer zugeordneten Teilnehmerstation gesendet wird, wird in der Richtung, in der sich diese Teilnehmerstation befindet, durch konstruktive Interferenz maximiert abgestrahlt.

Diese Funk-Kommunikationssysteme haben einen zellularen Aufbau, bei dem jeweils eine Basisstation mit zumindest einer Sendeantennenanordnung Teilnehmerstationen in einem bestimmten Funkzellenbereich versorgt. Dabei können störende Interferenzen mit Teilnehmerstationen benachbarter Funkzellenbereiche entstehen, die von einer benachbarten Basisstation versorgt werden. Dies ist insbesondere dann der Fall, wenn die Basisstation zu einer ihr zugeordneten Teilnehmerstation in einem Zeitschlitz sendet, in dem auch die Teilnehmerstation im benachbarten Funkzellenbereich Daten von ihrer, der benachbarten Basisstation empfängt.

Die Aufgabe der Erfindung besteht darin, ein Verfahren zur Reduzierung der Abwärtsverbindungs-Sendeleistung, die Teilnehmerstationen in benachbarten Zellen stört, bzw. ein zellulares Funk-Kommunikationsnetz mit adaptiven Antennen zum Durchführen eines solchen Verfahrens vorzuschlagen.

Diese Aufgabe wird durch das Verfahren mit den Merkmalen des Patentanspruchs 1 bzw. das Telekommunikationssystem gemäß den Merkmalen des Patentanspruchs 11 gelöst.

Vorteilhafte Ausgestaltungen sind Gegenstand von abhängigen Ansprüchen.

Bei diesem Verfahren wird vorteilhafterweise die Interferenz bei fremden Teilnehmern durch das Maximieren der Sendeleistung für eigene Teilnehmer einer sendenden bzw. Basisstation minimiert. Dabei werden die Funkwellen in Richtung der gewünschten eigenen Teilnehmerstationen gerichtet und außerdem wird die Sendeleistung in andere Richtungen minimiert.

Der Einsatz des Verfahrens bzw. des Funk-Kommunikationssystems bietet sich insbesondere für Mobilfunknetze an, die ein Zeitduplexverfahren (TDD) mit adaptiven Antennengruppen verwenden. Dies sind bei den geplanten Systemen z.B. UMTS UTRA-TDD und TD-SCDMA für China.

Der Einsatz bei FDD-Systemen, z.B. GSM, ist durch eine Frequenztransformation möglich, die durchgeführt wird, bevor die abgeschätzten Aufwärtsverbindungs-Kovarianzmatrizen für die Anwendung bei Abwärtsverbindungen verwendet werden können.

Im Falle asynchroner Umschaltpunkte werden vorteilhafterweise auch die Trainingssignale jener fremden netzseitigen Basisstationen berücksichtigt, die in einem Aufwärtsverbindungs-Zeitschlitz der Basisstation in Abwärtsrichtung senden.

Ein Ausführungsbeispiel wird nachfolgend anhand der Zeichnung näher erläutert. Es zeigen:

Fig. 1     ein Blockschaltbild eines Mobilfunksystems,

Fig. 2     eine schematische Darstellung der Rahmenstruktur des bekannten TDD-Übertragungsverfahrens und

Fig. 3     ein vereinfachtes Blockschaltbild einer Basisstation.

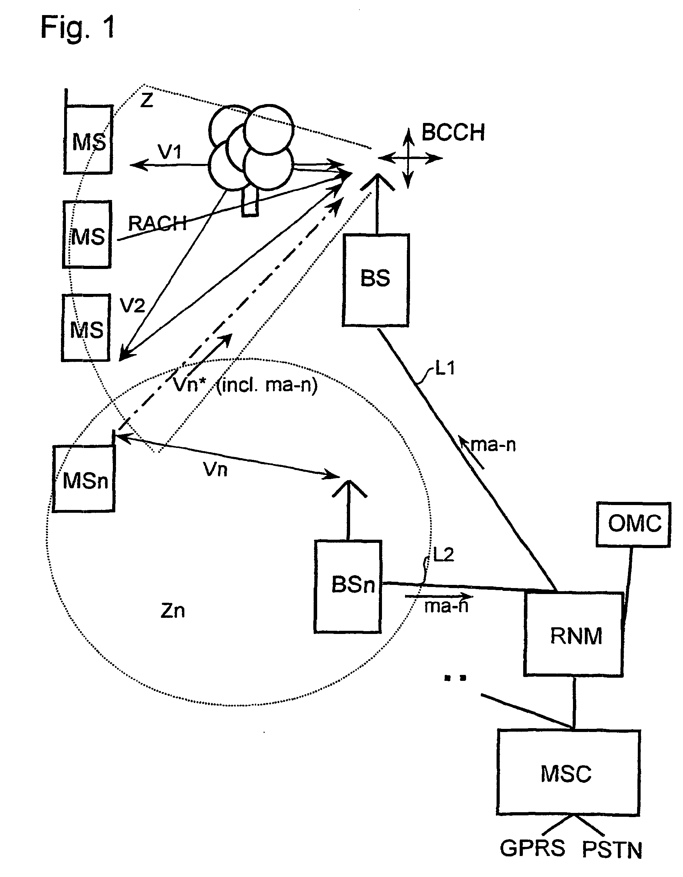

Das in Fig. 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN oder Paketdatennetz GPRS herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS, hier der Basisstationen BS und einer benachbarten Basisstation BSn. Eine solche Basisstation BS kann über eine Funkschnittstelle V eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen können pro Basisstation BS auch mehrere Funkzellen Z versorgt werden.

In Fig. 1 sind beispielhaft bestehende Verbindungen V1, V2 zur Übertragung von Nutzinformationen und Signalisierungsinformationen zwischen Teilnehmerstationen MS und einer Basisstation BS sowie eine Anforderung zur Ressourcenzuteilung oder eine kurze Bestätigungsmeldung in einem Zugriffskanal RACH durch eine weitere Teilnehmerstation MS dargestellt. Die benachbarte Basisstation BSn steht mit einer weiteren Teilnehmerstation in Verbindung, die nachfolgend aus Sicht der ihr fremden Basisstation BS auch als fremde oder benachbarte Teilnehmerstation MSn bezeichnet wird.

Weiterhin ist ein Organisationskanal (BCCH: Broadcast Control CHannel) dargestellt, der zur Übertragung von Nutz- und Signalisierungsinformationen mit einer definierten Sendeleistung von jeder der Basisstationen BS für alle Teilnehmerstationen MS bereitgestellt wird.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, insbesondere für Teilnehmerzugangsnetze mit drahtlosem Teilnehmeranschluß.

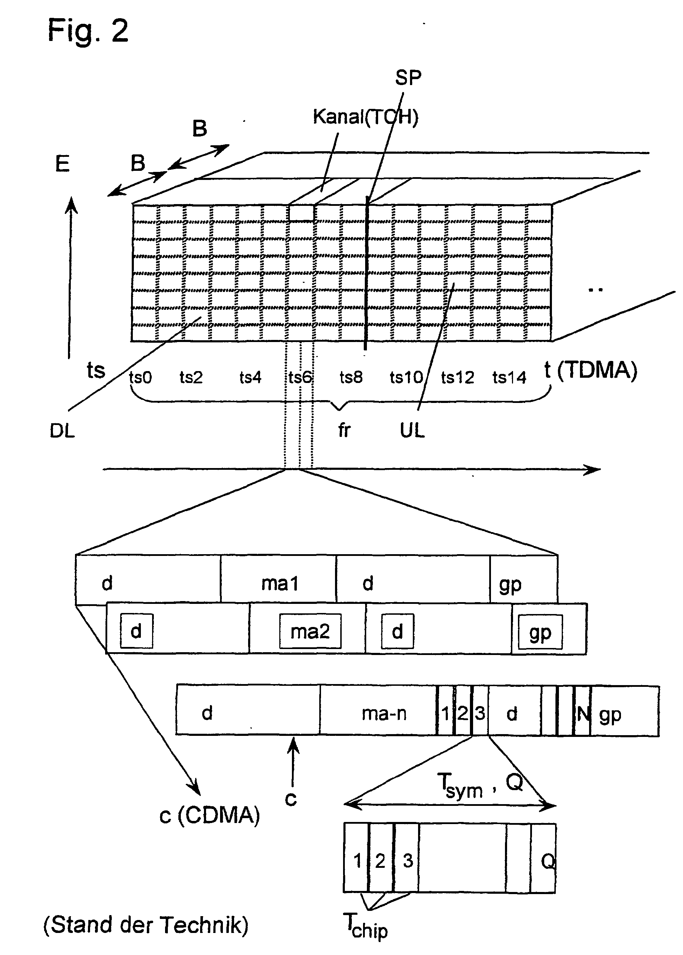

Die Rahmenstruktur der Funkübertragung ist aus Fig. 2 ersichtlich. Gemäß einer TDMA-Komponente (TDMA: Time Division Multiple Access) ist eine Aufteilung eines breitbandigen Frequenzbereichs, beispielsweise der Bandbreite B = 5 MHz, in mehrere Zeitschlitze ts gleicher Zeitdauer, beispielsweise 16 Zeitschlitze ts0 bis ts15, vorgesehen. Ein Frequenzband erstreckt sich über einen Frequenzbereich B. Ein Teil der Zeitschlitze ts0 bis ts8 wird im gesamten Funk-Kommunikationssystem in Abwärtsrichtung DL und ein Teil der Zeitschlitze ts9 bis ts15 wird in Aufwärtsrichtung UL benutzt. Dazwischen liegen ein oder mehrere synchrone Umschaltpunkte SP - in Fig. 2 nur ein Umschaltpunkt. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb der Zeitschlitze ts werden Informationen mehrerer Verbindungen in Funkblöcken übertragen. Funkblöcke zur Nutzdatenübertragung bestehen aus Abschnitten mit Daten d, in denen empfangsseitig bekannte Trainingssequenzen bzw. Mittambeln mal bis man eingebettet sind. Die Daten d mit 1..N Symbolen sind verbindungsindividuell mit einer Feinstruktur, einem Teilnehmerkode c, gespreizt, so dass empfangsseitig beispielsweise n Verbindungen durch diese CDMA-Komponente (CDMA: Code Division Multiple Access) separierbar sind. Ein physikalischer Kanal wird dabei durch ein Frequenzband B, einen Zeitschlitz, z.B. ts6, und einen Teilnehmerkode c gebildet. Zur Übertragung von Services mit hohen Datenraten werden in der Regel mehrere physikalische Ressourcen zu einem logischen Kanal verknüpft. Zum Beispiel werden für den Service 144 kbit/s in Uplink und Downlink jeweils 8 physikalische Ressourcen benötigt.

Die Spreizung von einzelnen Symbolen der Daten d bewirkt, dass innerhalb der Symboldauer Tsym Q Chips der Dauer Tchip übertragen werden. Die Q Chips bilden dabei den verbindungsindividuellen Teilnehmerkode c. Weiterhin ist innerhalb des Zeitschlitzes ts eine Schutzzeit gp (guard period) zur Kompensation unterschiedlicher Signallaufzeiten der Signale der Verbindungen vorgesehen.

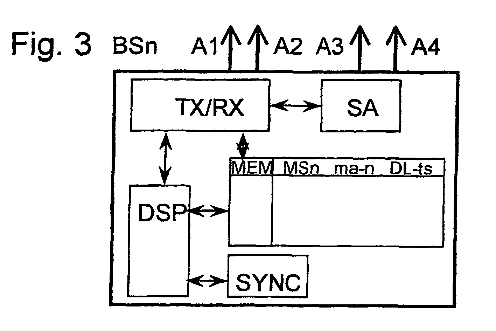

Wie aus Fig. 3 ersichtlich, weist die Basisstation BS eine Sende/Empfangseinrichtung TX/RX auf, die abzustrahlende Sendesignale digital/analog wandelt, vom Basisband in den Frequenzbereich B der Abstrahlung transformiert und die Sendesignale moduliert und verstärkt. Die verstärkten Signale werden dann der intelligenten bzw. adaptiven Antennenanordnung mit den Antennenelementen A1 - A4 zugeführt. Eine Signalerzeugungseinrichtung SA hat zuvor die Sendesignale in Funkblöcke zusammengestellt und dem entsprechenden Frequenzkanal TCH zugeordnet. Eine Signalverarbeitungseinrichtung DSP wertet über die Antennenanordnung und die Sende/Empfangseinrichtung TX/RX empfangene Empfangssignale aus und führt eine Kanalschätzung aus.

Um die Störeinflüsse der Basisstation BS, nachfolgend auch als störende Basisstation BS bezeichnet, auf die benachbarte bzw. gestörte Teilnehmerstation MSn zu verringern, wird in der störenden Basisstation BS eine Störungs-Kovarianzmatrix geschätzt. Während die bekannten Kovarianzmatrizen zur Verstärkung der gesendeten Signale in Richtung der kommunizierenden Teilnehmerstationen MS dienen, wird die Störungs-Kovarianzmatrix gebildet, um die Sendeleistung in Richtung der benachbarten, gestörten Teilnehmerstation(en) MSn zu reduzieren.

Von der benachbarten Basisstation BSn, welche mit der ihr zugeordneten und gestörten Teilnehmerstation BSn in Verbindung steht bzw. kommuniziert, werden Korrelationssignale an die störende Basisstation BS übermittelt. Im dargestellten Fall erfolgt die Übermittlung der Korrelationssignale über die Leitungen L1 und L2, welche die beiden Basisstationen BS, BSn mit der Einrichtung RNM zum Verwalten funktechnischer Ressourcen verbinden.

Als Korrelationssignale werden hier von der gestörten Teilnehmerstation MSn die Trainingssequenz(en) ma-n und/oder den Kode der Trainingssequenz(en) ma-n übertragen. Dadurch erkennt die störende Basisstation BS das Signal der fremden, gestörten Teilnehmerstation MSn und kann zugleich die Intensität dieses Signals bestimmen. Außerdem kann die störende Basisstation BS mit Hilfe ihrer Antennenanordnung mit den Antennenelementen A1 - A4 die Richtung ermitteln bzw. abschätzen, aus der dieses Signal einfällt, und somit die Richtung, in der sich die gestörte Teilnehmerstation MSn befindet.

Mit empfangenen Trainingssequenz(en) ma-n, die derzeit durch ein kodiertes Pilotsignal gebildet werden, führt die störende Basisstation BSn danach entsprechend eine Kanalabschätzung für eine oder mehrere fremde Teilnehmerstationen MSn durch.

Dadurch wird letztendlich eine Störungs-Kovarianzmatrix $\mathbf{R}_I^{(k)}$ gebildet, die zur Minimierung des störenden Sendesignals zur gestörten Teilnehmerstation MSn verwendet wird. Die Bestimmung der Störungs-Kovarianzmatrix $\mathbf{R}_I^{(k)}$ zur Reduzierung oder Minimierung der Sendeleistung in Richtung fremder, gestörter Teilnehmerstationen MSn erfolgt dabei vergleichbar zu der für sich aus der DE 198 03 188 A1 bekannten Bestimmung der Kovarianzmatrix $\mathbf{R}_S^{(k)}$ zur Maximierung der Sendeleistung in Richtung eigener Teilnehmerstationen MS. Das gleiche gilt für die Bestimmung von entsprechenden Strahlformungsvektoren $\mathbf{w}^{(k)}$, verallgemeinerten Eigenwerten $\lambda^{(k)}$ und den abgeschätzten Aufwärtsverbindungs-Kanalimpulsantwort-Matrizen $\mathbf{H}^{(k)}$.

Letztendlich wird das Verhältnis

$$r(\mathbf{w}^{(k)}) = \frac{\mathbf{w}^{(k)H}\mathbf{R}_S^{(k)}\mathbf{w}^{(k)}}{\mathbf{w}^{(k)H}\mathbf{R}_I^{(k)}\mathbf{w}^{(k)}}$$

maximiert, wobei der Index k mit $1 \leq k \leq K$ und K als der Zahl der zu berücksichtigen Teilnehmerstationen MS ist. Dabei sind die Strahlformungsvektoren $\mathbf{w}^{(k)}$ ein M-dimensionaler Vektor mit M (mit M = 4 in Fig. 3) als der Anzahl der Antennenelemente A1 - A4 der Antennenanordnung der störenden Basisstation BS.

Die quadratisch hermitesche und positiv-definite Störungs-Kovarianzmatrix $\mathbf{R}_I^{(k)}$, deren Zeilen- und Spaltenanzahl der Zahl M der Antennenelemente A1 - A4 entspricht, wird aus der Summe der insgesamt L Störungs-Kovarianzmatrizen $\mathbf{R}_{ad}^{(l)}$ für die einzelnen gestörten Teilnehmerstationen MSn der benachbarten Funkzellen Zn gebildet. Es gilt:

$$\mathbf{R}_I = \sum_{l=1}^{L}\mathbf{R}_{ad}^{(l)} \quad \text{mit} \quad \mathbf{R}_{ad}^{(l)} = \frac{1}{W}\cdot\mathbf{H}^{(l)}\mathbf{H}^{(l)H},$$

wobei $\mathbf{H}^{(l)}$ der geschätzten Aufwärtsverbindungs-Kanalimpulsantwort-Matrix der l-ten gestörten Teilnehmerstation MSn entspricht und das hochgestellte H die Transjugation kennzeichnet ("Hermitesche Operation"). Zur Verbesserung der Abschätzungsgenauigkeit können die Abschätzungen der räumlichen Störungs-Kovarianzmatrix $\mathbf{R}_I^{(l)}$ unter Verwendung einer rechteckigen oder exponentiellen Fensters über mehrere Zeitschlitze vorgenommen werden, die aus verschiedenen Rahmen stammen dürfen. Der teilnehmerspezifische Beitrag kann durch Korrelation mit den über das Kommunikationsnetz übermittelten Mengen von Trainingssequenzen ma-n identifiziert werden. Daher kann die störende Basisstation BS eine vorhergesagte Interferenz-Störungs-Kovarianzmatrix $\mathbf{R}_I^{(l)}$ für die Abwärtsverbindung DL für die Teilnehmerstationen MSn synthetisieren, die in einem Abwärtsverbindungs-Zeitschlitz DL-ts aktiv sind.

Jede Basisstation BSn kann alle Trainingssequenzen ma-n, die in ihrem Funkzellenbereich Z neu zugeteilt werden, automatisch an die benachbarten Basisstationen BS übertragen. Alternativ ist aber zur Reduzierung des Signalisierungsaufwands aber auch die gezielte Übertragung von Trainingssequenzen ma-n möglich, wenn eine Teilnehmerstation MSn feststellt, dass sie Signale von einer fremden Basisstation empfängt.

Das Übertragen von Trainingssequenzen ma-n erfolgt vorzugsweise mit Hilfe eines Protokolls, das insbesondere auf der Seite des Netzwerks (RAN / Radio Access Network) des Funk-Kommunikationssystems entsprechend eingerichtet ist.

Das Protokoll teilt den benachbarten, störenden Basisstationen BS zumindest mit, welche Teilnehmerstationen MSn welche Aufwärtsverbindungs-Trainingssequenzen ma-n zugewiesen bekommen haben. Empfängt die störende Basisstation BS eine solche Trainingssequenz ma-n, die eine eindeutioge Identifizierung ermöglicht, so kann die (störende) Basisstation BS dieses empfangene Signal der (gestörten) fremden Teilnehmerstation MSn zuordnen. Somit ist die (störende) Basisstation BS in der Lage, eine Schätzung jenes Beitrages zur Störungs-Kovarianzmatrix einzuleiten, der von der fremden Teilnehmerstation MSn herrührt.

Bei einer besonders bevorzugten Ausführungsform teilt das Protokoll den störenden Basisstationen BS mit, welchen Teilnehmerstationen MSn, welche Aufwärtsverbindungs-Trainingssequenzen ma-n in welchen Aufwärtsverbindungs-Zeitschlitzen UL-ts zugewiesen wurden. In dieser Ausführungsform wird vorausgesetzt, dass eine feste Zuordnung zwischen Aufwärtsverbindungs-Zeitschlitzen UL-ts und Abwärtsverbindungs-Zeitschlitzen DL-ts im Funkkommunikationssystem besteht. Dies ist eine bevorzugte Ausführungsform für symmetrische Dienste, die gleich große Verkehrslast in beiden Verbindungsrichtungen aufweisen, wie dies z.B. bei der Übertragung von Sprache der Fall ist.

Wenn eine solche feste Zuordnung zwischen UL-ts und DL-ts nicht vorausgesetzt werden kann, dann wird das Protokoll der oben genannten vorteilhaften Ausführungsform erweitert. Der BS wird nun zusätzlich mitgeteilt, in welchen Abwärtsverbindungs-Zeitschlitzen DL-ts die Teilnehmerstationen MSn Signale bzw. Daten von ihrer Basisstation BSn empfangen sollen.

Die Basisstationen BS, BSn verwalten also eine in Fig. 3 skizzierte Assoziationstabelle MEM, die Daten über benachbarte Teilnehmerstationen MSn, deren Trainingssequenzen ma-n und vorzugsweise die diesen zugeordneten Abwärtsverbindungs-Zeitschlitze DL-ts enthalten. Natürlich ergibt sich daraus, dass von der störenden Basisstation BS in Aufwärtsrichtung nicht nur die Signale der eigenen Teilnehmerstationen MS, sondern auch die Signale der fremden gestörten Teilnehmerstationen MSn empfangen und verwaltet werden. In Abwärtsrichtung werden hingegen die Signale zu den eigenen Teilnehmerstationen MS verstärkt und die Signale in Richtung der fremden gestörten Teilnehmerstationen MSn abgeschwächt. Der von einer Basisstation BS zu verwaltende Satz von aktiven Teilnehmerstationen MS, MSn in Aufwärts- und Abwärtsrichtung ist also verschieden.

Übertragung der Trainingssequenzen ma-n kann für den Fall, dass diese netzwerkseitig zentral vergeben werden, auch direkt von der zentralen Vergabestelle, z.B. der Einrichtung zum Zuteilen funktechnischer Ressourcen RNM, an die Basisstation BSn, die eine Kommunikationsverbindung aufbaut, und an eventuell störende benachbarte Basisstationen BS erfolgen.

Bei TDD-Systemen, bei denen die Übertragung in Aufwärts- und Abwärtsrichtung im gleichen Frequenzband erfolgt, können die räumlichen Kovarianzmatrizen bei insbesondere mitgeteilter Zeitschlitzinformation direkt bestimmt werden. Dahingegen ist bei FDD-Systemen (FDD: Frequency Division Duplex) eine Frequenztransformation durchzuführen, bevor die abgeschätzten Aufwärtsverbindungs-Kovarianzmatrizen für die Anwendung bei Abwärtsverbindungen verwendet werden können.

Für den Fall benachbarter Funkzellen Zn mit im Vergleich zur Zelle der störenden Basisstation BS nur sehr geringer Breite kann auch eine Teilnehmerstation in einer Funkzelle hinter der direkt benachbarten Funkzelle Zn von der Basisstation BS gestört werden. In solchen Szenerien werden nicht nur Informationen über die Teilnehmerstationen MSn der direkt benachbarten Funkzellen Zn sondern auch über die Teilnehmerstationen der weiter entfernter liegenden Funkzellen, die somit auch wie benachbarte Funkzellen Zn behandelt werden.

Dabei können zusätzlich auch die störenden Interferenzen mit Hilfe der zugehörigen Kovarianzmatrix berücksichtigt werden, die nicht aus dem Funk-Kommunikationssystem selbst stammen.

Vorteilhafterweise kann die Störungs-Kovarianzmatrix $\mathbf{R}_l^{(l)}$ auch die störenden Interferenzen berücksichtigen und einschließen, die für sich genommen aus der DE 198 03 188 bekannt sind.

Vorteilhafte Störungs-Kovarianzmatrizen ergeben sich aus dem a-priori Modell für zwei- bzw. drei-dimensionales isotropes Rauschen, bei dem angenommen wird, dass untereinander unkorrelierte homogene ebene Wellen mit gleicher Intensität aus allen Richtungen auf die BS einstrahlen. Die zugehörigen Störungskovarianzmatrizen können in geschlossener Form angegeben und abgespeichert werden.

## Patentansprüche

1. Verfahren zur Datenübertragung in einem Funk-Kommunikationssystem mit zwei oder mehr netzseitigen Basisstationen (BS, BSn) und einer Vielzahl von weiteren Funkstationen (MS, MSn), die jeweils mit einer der Basisstationen (BS, BSn) über Funkschnittstellen (V1, V2, Vn) in Verbindung stehen,

- wobei zumindest eine erste der Basisstationen (BS) eine Antennenanordnung mit einer Vielzahl von Antennenelementen (A1
- A4) und einer Signalverarbeitungseinrichtung (DSP) zum richtungsabhängigen Senden/Empfangen von Daten aufweist,
- wobei die erste der Basisstationen (BS) Daten zu einer mit ihr in Verbindung stehenden Funkstation (MS) zeitlich überlagert zu der Übertragung von Daten von einer fremden Basisstation (BSn) zu zumindest einer mit dieser in Verbindung stehenden fremden Funkstation (MSn) überträgt und
- wobei die Übertragung von Daten von der ersten Basisstation (BS) sich als Störung für die fremde Funkstation (MSn) bemerkbar macht,

**dadurch gekennzeichnet,**

- **dass** die Sendeleistung der Antennenanordnung der Basisstation (BS) in Richtung der zumindest einen fremden Funkstation (MSn) nach einer Übertragung einer Information über das Sendesignal der fremden Funkstation (MSn) und dem Empfang eines zuordbaren Signals der fremden Funkstation (MSn) reduziert wird.

2. Verfahren nach Anspruch 1, bei dem als Information über das Sendesignal der zumindest einen fremden Funkstation (MSn) deren Trainingssignal(e) (ma-n) und optional deren Aufwärtsverbindungs-Zeitschlitze (UL-ts) an die Basisstation (BS) übertragen wird.

3. Verfahren nach Anspruch 1 oder 2, bei dem die Information über das Sendesignal der fremden Funkstation (MSn) über netzseitige Einrichtungen (L1, RNM, L2) im Funk-Kommunikationssystem übertragen wird.

4. Verfahren nach einem vorstehenden Anspruch, bei dem zum Einstellen der Verteilung der räumlichen Sendeleistung an der Basisstation (BS) eine räumliche Störungs-Kovarianzmatrix $\mathbf{R_I}^{(l)}$ bestimmt oder geschätzt wird, aus der sich ein Strahlformungsvektor ($\mathbf{w}^{(k)}$) als Lösung des Optimierungsproblems

$$r(\mathbf{w}^{(k)}) = \frac{\mathbf{w}^{(k)H}\mathbf{R}_s^{(k)}\mathbf{w}^{(k)}}{\mathbf{w}^{(k)H}\mathbf{R}_I^{(k)}\mathbf{w}^{(k)}} = \max!$$

ergibt und Sendesignale der Basisstation (BS) mit dem Strahlformungsvektor ($\mathbf{w}^{(k)}$) gewichtet werden.

5. Verfahren nach Anspruch 4, bei dem die Lösung des Optimierungsproblems durch das Lösen des allgemeinen Eigenwertproblems mit positiv semi-definit hermitescher Matrix $\mathbf{R_S}^{(k)}$ und positiv definiter hermitescher Matrix $\mathbf{R_I}^{(k)}$,

$$\mathbf{R}_s^{(k)}\mathbf{w}^{(k)} = \lambda\mathbf{R}_I^{(k)}\mathbf{w}^{(k)}$$

erfolgt, wobei sich der Strahlformungsvektor $\mathbf{w}^{(k)}$ insbesondere als Eigenvektor zum maximalen Eigenwert ergibt.

6. Verfahren nach einem vorstehenden Anspruch, bei dem die Übertragung von Daten im FDD- oder TDD-Modus in Zeitschlitzen und/oder im Mehrschlitzverfahren erfolgt.

7. Verfahren nach einem vorstehenden Anspruch, bei dem die Information über das Sendesignal der fremden Funkstation (MSn) zur Basisstation (BS) regelmäßig oder nach einem Verbindungsaufbau der fremden Basisstation (BSn) mit der fremden Funkstation (MSn) übertragen wird.

8. Verfahren nach einem vorstehenden Anspruch, bei dem als Information über das Sendesignal der fremden Funkstation (MSn) zusätzlich übertragen wird, in welchen Abwärtsverbindungs-Zeitschlitzen (DL-ts) die fremde Funkstation MSn Daten von ihrer Basisstation (BSn) empfängt.

9. Verfahren nach einem vorstehenden Anspruch, bei dem zusätzlich auch die störenden Interferenzen mit Hilfe der zugehörigen Kovarianzmatrix berücksichtigt werden, die nicht aus dem Funk-Kommunikationssystem selbst stammen.

10. Verfahren nach einem vorstehenden Anspruch, bei dem in einem Funk-Kommunikationssystem mit asynchronen Umschaltpunkten (SP) Informationen über Trainingssignale (ma-n) und Aufwärtsverbindungs-Zeitschlitze (ts0 - ts8) der fremden netzseitigen Basisstation (BSn) an die Basisstation (BS) übermittelt werden, sofern diese Zeitschlitze von der Basisstation (BS) in Abwärtsrichtung (DL) verwendet werden.

11. Funk-Kommunikationssystem zum Durchführen eines Verfahrens nach einem vorstehenden Anspruch, mit

- zwei oder mehr netzseitigen Basisstationen (BS, BSn),

- einer Vielzahl von weiteren Funkstationen (MS, MSn), die jeweils mit einer der Basisstationen (BS, BSn) über Funkschnittstellen (V1, V2, Vn) in Verbindung stehen und

- zumindest einer Antennenanordnung mit einer Vielzahl von Antennenelementen (A1 - A4) und einer Signalverarbeitungseinrichtung (DSP) zum richtungsabhängigen Senden/Empfangen von Daten bei zumindest einer ersten der Basisstationen (BS),

- wobei die erste der Basisstationen (BS) Daten zu einer mit ihr in Verbindung stehenden Funkstation (MS) zeitlich überlagert zu der Übertragung von Daten von einer fremden Basisstation (BSn) zu einer mit dieser in Verbindung stehenden fremden Funkstation (MSn) überträgt, und

- wobei die Übertragung von Daten von der ersten Basisstation (BS) auch von der fremden Funkstation (MSn) empfangen wird,

**dadurch gekennzeichnet,**

- **dass** die Signalverarbeitungseinrichtung (DSP) zum Reduzieren der Sendeleistung der Antennenanordnung der Basisstation (BS) in Richtung der fremden Funkstation (MSn) nach einer Übertragung einer Information über das Sendesignal der fremden Funkstation (MSn) und dem Empfang eines zuordbaren Signals der fremden Funkstation (MSn) ausgebildet ist.

**12.** Funk-Kommunikationssystem nach Anspruch 11, bei dem
eine Assoziationstabelle (MEM) Daten (ma-n) der fremden Funkstation (MSn) bezüglich dieser zugeordneten Abwärtsverbindungs-Zeitschlitzen DL-ts, insbesondere die Information über deren Sendesignal, nach deren Übertragung zwischenspeichert und der Signalverarbeitungseinrichtung (DSP) bereitstellt.

**Claims**

**1.** Method for data transmission in a radio communication system having two or more network-side base stations (BS, BSn) and a multiplicity of further radio stations (MS, MSn) that are connected in each case to one of the base stations (BS, BSn) via air interfaces (V1, V2, Vn),

- at least a first one of the base stations (BS) having an antenna arrangement with a multiplicity of antenna elements (A1 - A4) and a signal processing device (DSP) for transmitting/receiving data as a function of direction,

- the first of the base stations (BS) transmitting data to a radio station (MS) connected to it in a fashion overlapping in time with the transmission of data from a foreign base station (BSn) to at least one foreign radio station (MSn) connected thereto, and

- the transmission of data from the first base station (BS) being noticed as disturbance for the foreign radio station (MSn),

**characterized**

- **in that** the transmit power of the antenna arrangement of the base station (BS) in the direction of the at least one foreign radio station (MSn) is reduced after a transmission of an item of information relating to the transmitted signal of the foreign radio station (MSn) and after the reception of an assignable signal of the foreign radio station (MSn).

**2.** Method according to Claim 1, in which transmitted to the base station (BS) as information relating to the transmitted signal of the at least one foreign radio station (MSn) is/are the training signal(s) (ma-n) thereof and, optionally, the uplink time slot (UL-ts) thereof.

**3.** Method according to Claim 1 or 2, in which the information relating to the transmitted signal of the foreign radio station (MSn) is transmitted via network-side devices (L1, RNM, L2) in the radio communication system.

**4.** Method according to a preceding claim, in which in order to set the distribution of the spatial transmit power at the base station (BS) there is determined or estimated a spatial error covariance matrix $\mathbf{R}_I^{(l)}$ which yields a beam-shaping vector ($\mathbf{w}^{(k)}$) as solution to the optimization problem

$$r\left(\mathbf{w}^{(k)}\right) = \frac{\mathbf{w}^{(k)H}\mathbf{R}_S^{(k)}\mathbf{w}^{(k)}}{\mathbf{w}^{(k)H}\mathbf{R}_I^{(k)}\mathbf{w}^{(k)}} = \max!$$

and transmitted signals of the base station (BS) are weighted with the beam-shaping vector ($\mathbf{w}^{(k)}$).

**5.** Method according to Claim 4, in which the solution to the optimization problem is performed by solving the general eigenvalue problem with positive semi-definite Hermitian matrix $\mathbf{R}_S^{(k)}$ and positive definite Hermitian matrix $\mathbf{R}_I^{(k)}$,

$$\mathbf{R}_S^{(k)}\mathbf{w}^{(k)} = \lambda \mathbf{R}_I^{(k)}\mathbf{w}^{(k)}$$

the beam-shaping vector $\mathbf{w}^{(k)}$ being yielded, in particular, as eigenvector relating to the maximum eigenvalue.

6. Method according to a preceding claim, in which the transmission of data in the FDD or TDD mode is performed in time slots and/or using the multi-slot method.

7. Method according to a preceding claim, in which the information relating to the transmitted signal of the foreign radio station (MSn) is transmitted to the base station (BS) regularly or after setting up a connection of the foreign base station (BSn) to the foreign radio station (MSn).

8. Method according to a preceding claim, in which transmitted in addition as information relating to the transmitted signal of the foreign radio station (MSn) are the downlink time slots (DL-ts) in which the foreign radio station MSn receives data from its base station (BSm).

9. Method according to a preceding claim, in which, in addition, the disturbing interference that does not originate from the radio communication system itself is also taken into account with the aid of the associated covariance matrix.

10. Method according to a preceding claim, in which information relating to training signals (ma-n) and uplink time slots (ts0 - ts8) of the foreign network-side base station (BSn) is transferred to the base station (BS) in a radio communication system with asynchronous switching points (SP) if these time slots are used by the base station (BS) in the downlink (DL).

11. Radio communication system for carrying out a method according to a preceding claim, having

    - two or more network-side base stations (BS, BSn),
    - a multiplicity of further radio stations (MS, MSn) that are connected in each case to one of the base stations (BS, BSn) via air interfaces (V1, V2, Vn), and
    - at least one antenna arrangement with a multiplicity of antenna elements (A1 - A4) and a signal processing device (DSP) for transmitting/receiving data as a function of direction, in the case of at least a first one of the base stations (BS),
    - the first of the base stations (BS) transmitting data to a radio station (MS) connected to it in a fashion overlapping in time with the transmission of data from a foreign base station (BSn) to a foreign radio station (MSn) connected thereto, and
    - the transmission of data from the first base station (BS) also being received by the foreign radio station (MSn),

    **characterized**

    - **in that** the signal processing device (DSP) is designed for reducing the transmit power of the antenna arrangement of the base station (BS) in the direction of the foreign radio station (MSn) after a transmission of an item of information relating to the transmitted signal of the foreign radio station (MSn) and the reception of an assignable signal of the foreign radio station (MSn).

12. Radio communication system according to Claim 11, in which an association table (MEM) buffers data (ma-n) of the foreign radio station (MSn) referring to downlink time slots DL-ts assigned to the latter, in particular the information relating to the transmitted signal thereof, after the transmission thereof, and provides them to the signal processing device (DSP).

**Revendications**

1. Procédé pour la transmission de données dans un système de radiocommunication comprenant deux ou plus de deux stations de base (BS, BSn) côté réseau et une pluralité d'autres stations radio (MS, MSn), qui sont en liaison respectivement avec l'une des stations de base (BS, BSn) par des interfaces radio (V1, V2, Vn),

    - au moins une première des stations de base (BS) présentant un agencement d'antennes avec une pluralité d'éléments d'antenne (A1-A4) et un dispositif de traitement de signal (DSP) pour l'émission/réception de données dépendante de la direction,
    - la première des stations de base (BS) transmettant des données à une station radio (MS) en liaison avec elle de façon décalée dans le temps par rapport à la transmission de données d'une station de base (BSn) étrangère à au moins une station radio (MSn) étrangère et en liaison avec celle-ci et
    - la transmission de données de la première station de base (BS) se faisant ressentir comme perturbation pour la station radio (MSn) étrangère,

    **caractérisé en ce que**

- la puissance d'émission de l'agencement d'antennes de la station de base (BS) en direction de l'au moins une station radio (MSn) étrangère est réduite après une transmission d'une information via le signal d'émission de la station radio (MSn) étrangère et après la réception d'un signal attribuable de la station radio (MSn) étrangère.

2. Procédé selon la revendication 1, dans lequel comme information sur le signal d'émission de la au moins une station radio (MSn) étrangère, son (ses) signal (signaux) d'entraînement (ma-n) et en option ses créneaux temporels de liaison ascendante (UL-ts) sont transmis à la station de base (BS).

3. Procédé selon la revendication 1 ou 2, dans lequel l'information sur le signal d'émission de la station radio (MSn) étrangère est transmise au moyen d'appareils (L1, RNM, L2) côté réseau dans le système de radiocommunication.

4. Procédé selon l'une quelconque des revendications précédentes, dans lequel, pour le réglage de la diffusion de la puissance d'émission dans l'espace à la station de base (BS), on détermine ou on évalue une matrice de covariance de perturbation $R_I^{(1)}$ dans l'espace à partir de laquelle on obtient un vecteur de mise en forme de faisceau ($W^{(k)}$) comme solution du problème d'optimisation

$$r(w^{(k)}) = \frac{W^{(k)H} R_S^{(k)} W^{(k)}}{W^{(k)H} R_I^{(k)} W^{(k)}} = \mathbf{max!}$$

et des signaux d'émission de la station de base (BS) sont pondérés avec le vecteur de mise en forme de faisceau ($W^{(k)}$).

5. Procédé selon la revendication 4, dans lequel la résolution du problème d'optimisation s'effectue par la résolution du problème général de valeur propre avec la matrice $R_S^{(k)}$ hermitienne, semi-définie positive et la matrice $R_I^{(k)}$ hermitienne, définie positive,

$$R_S^{(k)} W^{(k)} = \lambda R_I^{(k)} W^{(k)}$$

le vecteur de mise en forme de faisceau $W^{(k)}$ étant obtenu en particulier comme vecteur propre pour la valeur propre maximale.

6. Procédé selon l'une quelconque des revendications précédentes, dans lequel

la transmission de données dans le mode FDD ou le mode TDD s'effectue dans des créneaux temporels et/ou dans le procédé multicréneaux.

7. Procédé selon l'une quelconque des revendications précédentes, dans lequel l'information sur le signal d'émission de la station radio (MSn) étrangère est transmise à la station de base (BS) régulièrement ou après un établissement de liaison de la station de base (BSn) étrangère avec la station radio (MSn) étrangère.

8. Procédé selon l'une quelconque des revendications précédentes, dans lequel comme information sur le signal d'émission de la station radio (MSn) étrangère, on transmet en supplément dans quels créneaux temporels de liaison descendante (DL-ts) la station radio MSn étrangère reçoit des données de sa station de base (BSn).

9. Procédé selon l'une quelconque des revendications précédentes, dans lequel en supplément également les interférences perturbatrices, qui ne proviennent pas du système de radiocommunication même, sont prises en compte à l'aide de la matrice de covariance spécifique.

10. Procédé selon l'une quelconque des revendications précédentes, dans lequel, dans un système de radiocommunication avec des points d'inversion (SP) asynchrones, des informations sur des signaux d'entraînement (ma-n) et des créneaux temporels de liaison ascendante (ts0 - ts8) de la station de base (BSn) étrangère côté réseau sont transmises à la station de base (BS), dans la mesure où ces créneaux temporels sont utilisés par la station de base (BS) dans le sens descendant (DL).

11. Système de radiocommunication pour la mise en oeuvre d'un procédé selon une revendication précédente, comprenant

   - deux ou plus de deux stations de base (BS, BSn) côté réseau,
   - une pluralité d'autres stations radio (MS, MSn), qui sont en liaison respectivement avec l'une des stations de base (BS, BSn) par des interfaces radio (V1, V2, Vn) et
   - au moins un agencement d'antennes avec une pluralité d'éléments d'antenne (A1 - A4) et un dispositif de traitement de signal (DSP) pour l'émission/réception de données dépendante de la direction sur au moins une première des stations de base (BS),
   - la première des stations de base (BS) transmettant des données à une station radio (MS) en liaison avec elle de façon décalée dans le temps par rapport à la transmission de données d'une station de base (BSn) étrangère à une station radio (MSn) étrangère et en liaison avec celle-ci, et

- la transmission de données de la première station de base (BS) étant reçue également par la station radio (MSn) étrangère,

**caractérisé en ce que**

- le dispositif de traitement de signal (DSP) est réalisé pour la réduction de la puissance d'émission de l'agencement d'antennes de la station de base (BS) en direction de la station radio (MSn) étrangère après une transmission d'une information sur le signal d'émission de la station radio (Msn) étrangère et après la réception d'un signal attribuable de la station radio (MSn) étrangère.

**12.** Système de radiocommunication selon la revendication 11, dans lequel un tableau d'association (MEM) mémorise temporairement des données (ma-n) de la station radio (MSn) étrangère concernant ces créneaux temporels de liaison descendante DL-ts attribués, en particulier l'information sur son signal d'émission, après sa transmission et les met à la disposition du dispositif de traitement de signal (DSP).

# Fig. 1

# Fig. 2

(Stand der Technik)

Fig. 3